# EUROPÄISCHE PATENTSCHRIFT

(11) **EP 3 140 349 B1**
(45) Veröffentlichungstag und Bekanntmachung des Hinweises auf die Patenterteilung: **18.07.2018**
(21) Anmeldenummer: 15718900.2
(22) Anmeldetag: 29.04.2015
(51) Int. Cl.: C08L 67/02

(54) **DURCH THERMOFORMEN HERGESTELLTER ARTIKEL**
ARTICLE MANUFACTURED BY MEANS OF THERMOFORMING
ARTICLE FABRIQUÉ PAR THERMOFORMAGE

(30) Priorität: 09.05.2014 EP 14167689
(43) Veröffentlichungstag der Anmeldung: 15.03.2017
(73) Patentinhaber: BASF SE, 67056 Ludwigshafen am Rhein (DE)
(72) Erfinder: LEHENMEIER, Maximilian, 69118 Heidelberg (DE); SKUPIN, Gabriel, 67346 Speyer (DE); BUSSMANN, Martin, 67259 Beindersheim (DE)
(74) Vertreter: BASF IP Association
(86) Internationale Anmeldenummer: PCT/EP2015/059301
(87) Internationale Veröffentlichungsnummer: WO 2015/169659

(56) Entgegenhaltungen:
- EP-A1- 1 561 785
- WO-A1-2005/063881
- WO-A1-2013/000847
- US-A1- 2007 203 283

## Beschreibung

Die vorliegende Erfindung betrifft einen durch Thermoformen hergestellten Artikel enthaltend:
i) 45 bis 59 Gew.-%, bezogen auf das Gesamtgewicht der Komponenten i bis iv, eines biologisch abbaubaren Polyesters enthaltend:
   i-a) 90 bis 100 mol %, bezogen auf die Komponenten i-a bis i-b, Bernsteinsäure;
   i-b) 0 bis 10 mol %, bezogen auf die Komponenten i-a bis i-b, einer oder mehrerer C₆-C₂₀ Dicarbonsäuren;
   i-c) 98 bis 102 mol %, bezogen auf die Komponenten i-a bis i-b, 1,3-Propandiol oder 1,4-Butandiol;
   i-d) 0,05 bis 1 Gew.- %, bezogen auf die Komponenten i-a bis i-c eines Kettenverlängerers oder Verzweigers;
ii) 5 bis 14 Gew.- %, bezogen auf das Gesamtgewicht der Komponenten i bis iv, eines aliphatisch-aromatischen Polyesters enthaltend:
   ii-a) 30 bis 70 mol %, bezogen auf die Komponenten ii-a bis ii-b, einer C₆-C₁₈-Dicarbonsäure;
   ii-b) 30 bis 70 mol %, bezogen auf die Komponenten ii-a bis ii-b, Terephthalsäure;
   ii-c) 98 bis 100 mol %, bezogen auf die Komponenten ii-a bis ii-b, 1,3-Propandiol oder 1,4-Butandiol;
   ii-d) 0,05 bis 1 Gew.- %, bezogen auf die Komponenten ii-a bis ii-c eines Kettenverlängerers oder Verzweigers;
iii) 15 bis 24 Gew.-%, bezogen auf das Gesamtgewicht der Komponenten i bis iv, Polymilchsäure;
iv) 10 bis 35 Gew.-%, bezogen auf das Gesamtgewicht der Komponenten i bis iv, mindestens eines mineralischen Füllstoffs;
wobei für den Compound der Komponenten i bis iv gilt, dass das Verhältnis der Komponente i zur Komponente iii im Compound 2,2 bis 3,2 beträgt und dass der MVR nach DIN EN 1133-1 vom 01.03.2012 (190°C, 2,16 kg) des Compounds 1 bis 10 cm³/10 min beträgt.

Insbesondere betrifft die Erfindung einen wie eingangs durch Thermoformen hergestellten Artikel mit einer Wärmeformbeständigkeit (HDT-B Temperatur nach DIN EN ISO 75-2:2004-9) von 85 bis 105 °C. Derart wärmeformbeständige Artikel eignen sich zur Herstellung von Kaffeekapseln, Deckel für Heißgetränke, Besteck, Behältnisse zur Heißabfüllung und Mikrowellengeschirr.

Mit Füllstoff versehene, biologisch abbaubare Polymermischungen, die ein weiches Polymer wie beispielsweise einen aliphatisch-aromatischen Polyester (PBAT) und ein steifes Polymer wie beispielsweise Polymilchsäure (PLA) enthalten, sind aus der US 6,573,340 und der WO 2005/063881 bekannt. Weiterhin sind gefüllte Polymermischungen aus Polybutylensuccinat (PBS) und PLA aus der WO 2013/000847 und aus PBAT, PBS und PLA aus der EP 1561785 bekannt. Die aus den letzten beiden Schriften bekannten Polymermischungen sind zwar fürs Thermoformen geeignet, sind jedoch wegen ihrer eingeschränkten Wärmeformbeständigkeit und ihrer mittelmäßigen Schlagzähfestigkeit für Anwendungen wie Kaffeekapseln, Deckel für Heißgetränke oder Mikrowellengeschirr nicht geeignet.

Ziel der vorliegenden Erfindung war es somit durch Thermoformen hergestellte Artikel bereitzustellen, die die obengenannten Nachteile nicht aufweisen. Insbesondere war es das Ziel, einen Kunststoff mit einer Wärmeformbeständigkeit ausreichend für Anwendungen im Bereich heißer Lebensmittel bereitzustellen. Außerdem sollte die Schlagzähfestigkeit ausreichend hoch sein, damit die Artikel die an sie gestellten mechanischen Anforderungen erfüllen.

Überraschenderweise erfüllt das Ziel ein durch Thermoformen hergestellter Artikel enthaltend:
i) 45 bis 59 Gew.-%, vorzugsweise 45 bis 55 Gew.-%, bezogen auf das Gesamtgewicht der Komponenten i bis iv, eines biologisch abbaubaren Polyesters enthaltend:
   i-a) 90 bis 100 mol %, bezogen auf die Komponenten i-a bis i-b, Bernsteinsäure;
   i-b) 0 bis 10 mol %, bezogen auf die Komponenten i-a bis i-b, einer oder mehrerer C₆-C₂₀ Dicarbonsäuren;
   i-c) 98 bis 102 mol %, bezogen auf die Komponenten i-a bis i-b, 1,3-Propandiol oder 1,4-Butandiol;
   i-d) 0,05 bis 1 Gew.-%, bezogen auf die Komponenten i-a bis i-c eines Kettenverlängerers oder Verzweigers;
ii) 5 bis 14 Gew.- %, vorzugsweise 5 bis 10 Gew.-%, bezogen auf das Gesamtgewicht der Komponenten i bis iv, eines aliphatisch-aromatischen Polyesters enthaltend:
   ii-a) 30 bis 70 mol %, bezogen auf die Komponenten ii-a bis ii-b, einer C₆-C₁₈-Dicarbonsäure;
   ii-b) 30 bis 70 mol %, bezogen auf die Komponenten ii-a bis ii-b, Terephthalsäure;
   ii-c) 98 bis 100 mol %, bezogen auf die Komponenten ii-a bis ii-b, 1,3-Propandiol oder 1,4-Butandiol;
   ii-d) 0,05 bis 1 Gew.- %, bezogen auf die Komponenten ii-a bis ii-c eines Kettenverlängerers oder Verzweigers;
iii) 15 bis 24 Gew.-%, vorzugsweise 15 bis 20 Gew.-%, bezogen auf das Gesamtgewicht der Komponenten i bis iv, Polymilchsäure;
iv) 10 bis 35 Gew.-%, vorzugsweise 20 bis 30 Gew.-%, bezogen auf das Gesamtgewicht der Komponenten i bis iv, mindestens eines mineralischen Füllstoffs;
wobei für den Compound der Komponenten i bis iv gilt, dass das Verhältnis der Komponente i zur Komponente iii im Compound 2,2 bis 3,2 beträgt und dass der MVR nach DIN EN 1133-1 vom 01.03.2012 (190°C, 2,16 kg) des Compounds 1 bis 10 cm³/10 min beträgt, Weiterhin liegt die HDT-B Temperatur nach ISO 75-2 der aus diesen Compounds hergestellten Artikel vorzugsweise bei 80 bis 105 °C und gleichzeitig weisen diese Artikel eine Charpy-Schlagzähigkeit gemäß DIN EN 179-1/1eU:2000+Amd.A (gemessen bei 23 °C, 50% relativer Feuchte) von größer 60 kJ/m², insbesondere von 70 bis 250 kJ/m² auf.

Im Folgenden wird die Erfindung näher beschrieben.

Die für die Erfindung geeigneten aliphatischen Polyester i sind in der WO 2010/034711 näher beschrieben, auf die hier ausdrücklich Bezug genommen wird.

Polyester i sind in der Regel wie folgt aufgebaut:
i-a) 90 bis 100 mol %, bezogen auf die Komponenten i-a bis i-b, Bernsteinsäure;
i-b) 0 bis 10 mol %, bezogen auf die Komponenten i-a bis i-b, einer oder mehrerer C₆-C₂₀ Dicarbonsäuren;
i-c) 98 bis 102 mol %, bezogen auf die Komponenten i-a bis i-b, 1,3-Propandiol oder 1,4-Butandiol;
i-d) 0,05 bis 1 Gew.-%, bezogen auf die Komponenten i-a bis i-c eines Kettenverlängerers oder Verzweigers.

Die Synthese der beschriebenen Polyester i erfolgt vorzugsweise in einer direkten Polykondensationsreaktion der einzelnen Komponenten. Die Dicarbonsäurederivate werden dabei zusammen mit dem Diol in Anwesenheit eines Umesterungskatalysators direkt zum Polykondensat hohen Molekulargewichts umgesetzt. Auf der anderen Seite kann der Copolyester i auch durch Umesterung von Polybutylensuccinat (PBS) mit C₆-C₂₀ Dicarbonsäuren in Gegenwart von Diol gewonnen werden. Als Katalysatoren werden üblicherweise Zink-, Aluminium- und insbesondere Titankatalysatoren eingesetzt. Titankatalysatoren wie Tetra(isopropyl)orthotitanat und insbesondere Tetraisobutoxytitanat (TBOT) haben gegenüber den in der Literatur häufig verwendeten Zinn-, Antimon-, Kobalt- und Bleikatalysatoren wie beispielsweise Zinndioctanoat den Vorteil, dass im Produkt verbleibende Restmengen des Katalysators oder Folgeprodukt des Katalysators weniger toxisch sind. Dieser Umstand ist bei den biologisch abbaubaren Polyestern besonders wichtig, da sie beispielsweise als Kompostierbeutel oder Mulchfolien unmittelbar in die Umwelt gelangen.

Die Bernsteinsäure oder ein Gemisch der Dicarbonsäuren wird im Allgemeinen in Anwesenheit eines Überschusses an Diol zusammen mit dem Katalysator in der Regel zunächst während eines Zeitraumes von etwa 60-180 min auf eine Innentemperatur von 170 bis 230 °C erhitzt und entstehendes Wasser abdestilliert. Anschließend wird die Schmelze des so erhaltenen Präpolyesters üblicherweise bei einer Innentemperatur von 200 zu 250 °C innerhalb von 3 bis 6 Stunden bei vermindertem Druck unter Abdestillieren freiwerdenden Diols bis zur gewünschten Viskosität mit einer Viskositätszahl (VZ) von 100 bis 450 mL/g und vorzugsweise 120 bis 250 mL/g kondensiert.

Die erfindungsgemäßen Polyester i lassen sich darüber hinaus nach den in JP 2008-45117 und EP-A 488 617 beschriebenen Verfahren herstellen. Als vorteilhaft hat es sich erwiesen, zunächst die Komponenten a bis c zu einem Präpolyester mit einer VZ von 50 bis 100 mL/g, vorzugsweise 60 bis 80 mL/g umzusetzen und diesen anschließend mit einem Kettenverlängerer i-d, beispielsweise mit Diisocyanaten oder mit epoxidhaltigen Polymethacrylaten in einer Kettenverlängerungsreaktion zu einem Polyester i mit einer VZ von 100 bis 450 mL/g, vorzugsweise 150 bis 300 mL/g umzusetzen.

Als Säurekomponente i-a werden 90 bis 100 mol %, bezogen auf die Säurekomponenten a und b, vorzugsweise 91 bis 99 mol%, und insbesondere bevorzugt 92 bis 98 mol% Bernsteinsäure eingesetzt. Bernsteinsäure ist auf petrochemischem Weg sowie vorzugsweise aus nachwachsenden Rohstoffen wie beispielsweise in EP-A 2185682 beschrieben zugänglich. EP-A 2185682 offenbart ein biotechnologisches Verfahren zur Herstellung von Bernsteinsäure und 1,4-Butandiol ausgehend von unterschiedlichen Kohlehydraten mit Mikroorganismen aus der Klasse der Pasteurellaceae.

Säurekomponente i-b wird in 0 bis 10 mol%, vorzugsweise 1 bis 9 mol%, und insbesondere bevorzugt 2 bis 8 mol% bezogen auf die Säurekomponenten i-a und i-b, eingesetzt.

Unter C₆-C₂₀ Dicarbonsäuren b sind insbesondere Adipinsäure, Korksäure, Azelainsäure, Sebazinsäure, Brassylsäure und/oder Arachidonsäure zu verstehen. Bevorzugt sind Korksäure, Azelainsäure, Sebazinsäure und/oder Brassylsäure. Die obengenannten Säuren sind aus nachwachsenden Rohstoffen zugänglich. Beispielsweise Sebazinsäure ist aus Rizinusöl zugänglich. Derartige Polyester zeichnen sich durch ein exzellentes biologisches Abbauverhalten aus (Literatur: Polym. Degr. Stab. 2004, 85, 855-863).

Die Dicarbonsäuren i-a und i-b können entweder als freie Säure oder in Form esterbildender Derivate eingesetzt werden. Als esterbildende Derivate sind insbesondere die Di-C₁-bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden. Dabei können die Dicarbonsäuren oder deren esterbildenden Derivate, einzeln oder als Gemisch eingesetzt werden.

Die Diole 1,3-Propandiol und 1,4-Butandiol sind ebenfalls aus nachwachsenden Rohstoffen zugänglich. Es können auch Mischungen der beiden Diole verwendet werden. Aufgrund der höheren Schmelztemperaturen und der besseren Kristallisation des gebildeten Copolymers ist 1,4-Butandiol als Diol bevorzugt.

In der Regel wird zu Beginn der Polymerisation das Diol (Komponente i-c) zu den Säuren (Komponenten i-a und i-b) in einem Verhältnis von Diol zu Disäuren von 1,0:1 bis 2,5:1 und vorzugsweise 1,3:1 bis 2,2:1 eingestellt. Überschüssige Diolmengen werden während der Polymerisation abgezogen, sodass sich am Ende der Polymerisation ein ungefähr äquimolares Verhältnis einstellt. Unter ungefähr äquimolar wird ein Disäure/Diol-Verhältnis von 0,98 bis 1,00 verstanden.

In der Regel werden 0,05 bis 1 Gew-%, vorzugsweise 0,1 bis 0,9 Gew.-% und insbesondere bevorzugt 0,1 bis 0,8 Gew.-% bezogen auf das Gesamtgewicht der Komponenten i-a bis i-b, eines Verzweigers i-d und/oder Kettenverlängerers i-d' ausgewählt aus der Gruppe bestehend aus: einem polyfunktionellen Isocyanat, Isocyanurat, Oxazolin, Carbonsäureanhydrid wie Maleinsäureanhydrid, Epoxid (insbesondere einem epoxidhaltigen Poly(meth)acrylats), einem mindestens trifunktionellen Alkohol oder einer mindestens trifunktionellen Carbonsäure eingesetzt. Als Kettenverlängerer d' kommen polyfunktionelle und insbesondere difunktionelle Isocyanate, Isocyanurate, Oxazoline oder Epoxide in Frage.

Kettenverlängerer sowie Alkohole oder Carbonsäurederivate mit mindestens drei funktionellen Gruppen können auch als Verzweiger aufgefasst werden. Besonders bevorzugte Verbindungen haben drei bis sechs funktionellen Gruppen. Beispielhaft seien genannt: Weinsäure, Zitronensäure, Äpfelsäure, Trimesinsäure, Trimellitsäure, Trimellitsäureanhydrid, Pyromellitsäure und Pyromellitsäuredianhydrid; Trimethylolpropan, Trimethylolethan; Pentaerythrit, Polyethertriole und Glycerin. Bevorzugt sind Polyole wie Trimethylolpropan, Pentaerythrit und insbesondere Glycerin. Mittels der Komponenten d lassen sich biologisch abbaubare Polyester mit einer strukturellen Viskosität aufbauen. Das rheologische Verhalten der Schmelzen verbessert sich; die biologisch abbaubaren Polyester lassen sich leichter verarbeiten.

In der Regel ist es sinnvoll die verzweigenden (mindestens trifunktionellen) Verbindungen zu einem früheren Zeitpunkt der Polymerisation zuzugeben.

Als bifunktionelle Kettenverlängerer eignen sich beispielsweise Toluylen-2,4-diisocyanat, Toluylen-2,6-diisocyanat, 2,2'-Diphenylmethandiisocyanat, 2,4'-Diphenylmethandiisocyanat, 4,4'-Diphenylmethan-diisocyanat, Naphthylen-1,5-diisocyanat oder Xylylen-diisocyanat,1,6-Hexamethylendiisocyanat, Isophorondiisocyanat oder Methylen-bis(4-isocyanatocyclo-hexan) verstanden. Besonders bevorzugt sind Isophorondiisocyanat und insbesondere 1,6-Hexamethylendiisocyanat.

Unter aliphatischen Polyestern i werden insbesondere Polyester wie Polybutylensuccinat (PBS), Polybutylensuccinat-co-adipat (PBSA), Polybutylensuccinat-co-sebacat (PBSSe), Polybutylensuccinat-co-azelat (PBSAz) oder Polybutylensuccinat-co-brassylat (PBSBr) verstanden. Die aliphatischen Polyester PBS und PBSA werden beispielsweise von Showa Highpolymer unter dem Namen Bionolle® und von Mitsubishi unter dem Namen GSPla® vermarktet. Neuere Entwicklungen sind in der WO 2010/034711 beschrieben.

Die Polyester i weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 50000 g/mol, ein gewichtsmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 30 und 450, vorzugsweise von 50 bis 400 g/mL (gemessen in o-Dichlorbenzol/Phenol (Gewichtsverhältnis 50/50)). Der Schmelzpunkt liegt im Bereich von 85 bis 130, bevorzugt im Bereich von 95 bis 120°C. Der MVR Bereich nach DIN EN 1133-1 liegt zwischen 0,5 bis 15 und vorzugsweise 1 bis 10 cm³/10 min (190 °C, 2,16 kg).

Unter aliphatisch-aromatischen Polyestern ii sind lineare, kettenverlängerte und vorzugsweise verzweigte und kettenverlängerte Polyester zu verstehen, wie beispielsweise in der WO 96/15173 bis 15176 oder in der WO 98/12242, auf die ausdrücklich Bezug genommen wird, beschrieben. Mischungen unterschiedlicher teilaromatischer Polyester kommen ebenso in Betracht. Interessante jüngere Entwicklungen basieren auf nachwachsenden Rohstoffen (siehe WO2010/034689). Insbesondere sind unter Polyestern ii Produkte wie ecoflex® (BASF SE) zu verstehen.

Zu den bevorzugten Polyestern ii zählen Polyester, die als wesentliche Komponenten enthalten:
ii-a) 30 bis 70 mol-%, vorzugsweise 40 bis 60 und insbesondere bevorzugt 50 bis 60 mol-%, bezogen auf die Komponenten ii-a) bis ii-b), einer aliphatischen Dicarbonsäure oder Mischungen davon, vorzugsweise wie im Folgenenden ausgeführt: Adipinsäure, Azelainsäure, Sebacinsäure und Brassylsäure,
ii-b) 30 bis 70 mol-%, vorzugsweise 40 bis 60 und insbesondere bevorzugt 40 bis 50 mol-%, bezogen auf die Komponenten ii-a) und ii-b), einer aromatischen Dicarbonsäure oder Mischungen davon, vorzugsweise wie im Folgenenden ausgeführt: Terephthalsäure,
ii-c) 98,5 bis 100 mol-%, bezogen auf die Komponenten ii-a) bis ii-b), 1,4-Butandiol und 1,3-Propandiol; und
ii-d) 0,05 bis 1,5 Gew.-%, vorzugsweise 0,1 bis 0,2 Gew.-%, bezogen auf die Komponenten iia) bis ii-c), eines Kettenverlängerers, insbesondere eines di- oder polyfunktionellen Isocyanats, vorzugsweise Hexamethylendiisocyanats und gegebenenfalls eines Verzweigers vorzugsweise: Trimethylolpropan, Pentaerythrit und insbesondere Glycerin.

Als aliphatische Disäuren und die entsprechenden Derivate ii-a kommen im Allgemeinen solche mit 6 bis 20 Kohlenstoffatomen, vorzugsweise 6 bis 10 Kohlenstoffatomen, in Betracht. Sie können sowohl linear als auch verzweigt sein. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: 2-Methylglutarsäure, 3-Methylglutarsäure, α-Ketoglutarsäure, Adipinsäure, Pimelinsäure, Azelainsäure, Sebacinsäure, Brassylsäure, Suberinsäure (Korksäure), und Itaconsäure. Dabei können die Dicarbonsäuren oder deren esterbildenden Derivate, einzeln oder als Gemisch aus zwei oder mehr davon eingesetzt werden.

Bevorzugt werden Adipinsäure, Azelainsäure, Sebacinsäure, Brassylsäure oder deren jeweilige esterbildenden Derivate oder Mischungen davon eingesetzt. Besonders bevorzugt werden Adipinsäure oder Sebacinsäure oder deren jeweilige esterbildenden Derivate oder Mischungen davon eingesetzt.

Insbesondere bevorzugt sind die folgenden aliphatisch-aromatischen Polyester: Polybutylenadipatterephthalat (PBAT), Polybutylensebacatterephthalat (PBSeT).

Die aromatischen Dicarbonsäuren oder deren esterbildende Derivate ii-b können einzeln oder als Gemisch aus zwei oder mehr davon eingesetzt werden. Besonders bevorzugt wird Terephthalsäure oder deren esterbildende Derivate wie Dimethylterephthalat, verwendet.

Die Diole ii-c - 1,4-Butandiol und 1,3- Propandiol - sind als nachwachsender Rohstoff zugänglich. Es können auch Mischungen der genannten Diole verwendet werden.

In der Regel werden 0,05 bis 1 Gew-%, vorzugsweise 0,1 bis 1,0 Gew.-% und insbesondere bevorzugt 0,1 bis 0,3 Gew.-%, bezogen auf das Gesamtgewicht des Polyesters, eines Verzweigers und/oder 0,05 bis 1 Gew-%, vorzugsweise 0,1 bis 1,0 Gew.- %, bezogen auf das Gesamtgewicht des Polyesters, eines Kettenverlängerers (ii-d) eingesetzt. Bevorzugt sind die gleichen Verzweiger und Kettenverlängerer (ii-d) wie die zuvor detailliert beschriebenen Verzweiger und Kettenverlängerer (i-d).

Die Polyester ii weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 50 und 450, vorzugsweise von 80 bis 250 g/mL (gemessen in o-Dichlorbenzol/Phenol (Gewichtsverhältnis 50/50). Der Schmelzpunkt liegt im Bereich von 85 bis 150, bevorzugt im Bereich von 95 bis 140°C.

Der MVR (Schmelzvolumenrate) nach EN ISO 1133-1 DE (190°C, 2,16 kg Gewicht) liegt im Allgemeinen bei 0,5 bis 8, bevorzugt bei 0,8 bis 6 cm³/10 min. Die Säurezahlen nach DIN EN 12634 liegen im Allgemeinen bei 0,01 bis 1,2 mg KOH/g, vorzugsweise bei 0,01 bis 1,0 mg KOH/g und insbesondere bevorzugt bei 0,01 bis 0,7 mg KOH/g.

Als steife Komponente iii wird Polymilchsäure (PLA) eingesetzt.

Polymilchsäure mit dem folgenden Eigenschaftsprofil wird bevorzugt eingesetzt:
- einer Schmelzvolumenrate (MVR bei 190° C und 2.16 kg nach ISO 1133-1 DE) von 0.5 bis 15 insbesondere von 1 bis 10 cm³/10 Minuten
- einem Schmelzpunkt unter 240° C
- einem Glaspunkt (Tg) größer 55°C
- einem Wassergehalt von kleiner 1000 ppm
- einem Monomeren-Restgehalt (Lactid) von kleiner 0.3%
- einem Molekulargewicht von größer 80 000 Dalton.

Bevorzugte Polymilchsäuren sind beispielsweise NatureWorks® 6201 D, 6202 D, 6251 D, 3051 D und insbesondere 4020 D oder 4043 D sowie kristallinen Polymilchsäuretypen der Fa. NatureWorks.

Die Polymilchsäure iii wird in einem Gewichtsprozent-Anteil, bezogen auf die Komponenten i und iv, von 15 bis 24%, vorzugsweise von 15 bis 20% eingesetzt. Hierbei bildet vorzugsweise die Polymilchsäure iii die disperse Phase und der Polyester i die kontinuierliche oder ist Teil einer cokontinuierlichen Phase. Polymermischungen mit Polyester i in der kontinuierlichen Phase oder als Teil einer cokontinuierlichen Phase weisen eine höhere Wärmeformbeständigkeit auf als Polymermischungen, in denen Polymilchsäure iii die kontinuierliche Phase bildet. Um eine gute Wärmeformbeständigkeit im thermogeformten Artikel zu gewährleisten (HDT-B Temperatur nach ISO 75-2 von 85 bis 105 °C) sollte das Verhältnis der Komponente i zur Komponente iii im Compound, aus dem die Artikel hergestellt werden, 2,2 bis 3,2 und vorzugsweise 2,5 bis 3,1 betragen.

In der Regel werden 10 bis 35 Gew.-%, insbesondere 20 bis 30 Gew.-% und besonders bevorzugt 25 bis 30 Gew.-%, bezogen auf das Gesamtgewicht der Komponenten i bis iv, mindestens eines mineralischen Füllstoffs iv ausgewählt aus der Gruppe bestehend aus: Kreide, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorillonite, Talkum und Mineralfasern eingesetzt.

Kreide und Talkum sind als Füllstoffe besonders bevorzugt. Interessanterweise hat sich herausgestellt, dass durch den Zusatz von Kreide die biologische Abbaubarkeit der Artikel noch verbessert werden kann. Mit Talkum wiederum lässt sich effektiver das E-Modul erhöhen und die Wärmeformbeständigkeit verbessern.

Als besonders vorteilhaft haben sich Mischungen von Kreide und Talkum erwiesen. Hierbei hat sich ein Mischungsverhältnis von 1 : 5 bis 5 : 1, bevorzugt von 1 : 3 bis 3 : 1 und insbesondere von 1 : 2 bis 1 : 1 als vorteilhaft herausgestellt.

Weiterhin kann der erfindungsgemäße Compound der Komponenten i bis iv weitere dem Fachmann bekannte, Additive enthalten. Beispielsweise die in der Kunststofftechnik üblichen Zusatzstoffe wie Stabilisatoren; Nukleierungsmittel wie die bereits obengenannten mineralischen Füllstoffe iv oder auch kristalline Polymilchsäure; Gleit- und Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Wachse wie beispielsweise Erucasäureamid, Stearinsäureamid oder Behenamid, Bienenwachs oder Bienenwachsester; Antistatikum, UV-Absorbers; UV-Stabilisators; Antifog-Mittel oder Farbstoffe. Die Additive werden in Konzentrationen von 0 bis 2 Gew.-%, insbesondere 0,1 bis 2 Gew.-% bezogen auf den erfindungsgemäßen Compound i bis iv eingesetzt. Weichmacher können in 0,1 bis 10 Gew.-% in dem erfindungsgemäßen Compound i bis iv enthalten sein.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% nach 180 Tagen aufweist.

Im Allgemeinen führt die biologische Abbaubarkeit dazu, dass die Polyester-(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 (Bezug nehmend auf ISO 14855) CO₂-freie Luft durch gereiften Kompost während des Kompostierens strömen gelassen und dieser einem definiertem Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

Das Thermoformen ist ein Verfahren zur Umformung thermoplastischer Kunststoffe und wird auch als Tiefziehen bezeichnet.

Das Halbzeug wird je nach Anlagentyp als Flachfolie von einer Rolle oder Plattenware zugeführt. Die Herstellung der Folien und Platten erfolgt üblicherweise mit einem Einschneckenextruder mit nachgeschaltetem Breitschlitzwerkzeug und 3-Walzen-Glättwerk.

Artikel aus thermogeformten Folien (typischerweise 50 µm bis 1 mm) wie Pralinenschachteleinlagen, Schaumküsse-Verpackung, Spielekartoneinsätze, Klappblister für alle möglichen Kleinartikel an Lochrasterwänden im Einzelhandel, Joghurt- oder Margarinebecher sind weit verbreitet. Schiebekartenblister, Siegelhauben und die schwer zu öffnenden Klappblister, in denen oft Kleinteile verkauft werden, und die mittels Hochfrequenz-HF-Elektroden verschweißt sind, gehören auch dazu. Ein bevorzugter Artikel sind Deckel für Kaffeebecher oder andere Becher für Heissgetränke.

Platten zwischen 1 bis 2 mm Dicke werden verarbeitet für Sortiertabletts, Transporttabletts, KLT (Kleinladungsträger)-Einlagen oder einfache technische Teile.

Ein besonders bevorzugter, durch Thermoformen hergestellter Artikel ist die Kaffeekapsel. Unter Kaffeekapsel wird ein Gebinde von 1 ml bis 80 ml Füllvolumen, vorzugsweise 3 bis 60 ml, verstanden. Dieses Gebinde wird mit einem pulverförmigen Lebensmittel, insbesondere Kaffeepulver oder einer Mischung aus pulverförmigen Lebensmitteln befüllt. Unter Lebensmittel wird neben Kaffee, Tee, Milch, Kakao und Suppenextrakte verstanden. Die Form des Gebindes kann rotationssymmetrisch, kegelförmig, kugelförmig, als auch eckig sein, vorzugswiese jedoch rotationssymmetrisch und hauptsächlich zylindrisch sein. Dieses Gebinde dient zum einen zur Lagerung des/der Lebensmittel sowie zum Zubereiten eines wässrigen Heißgetränks welches durch das Durchströmen von heißem Wasser (zwischen 80 und 100°C) in einem anschließenden Schritt hergestellt wird. Das durchströmende Wasser löst beim Durchströmen des Gebindes Geschmacks- und Bitterstoffe und bildet so das Heißgetränk.
Dieses Gebinde soll durch Thermoformen gefertigt werden. Die hierzu verwendete Wanddicke der Flachfolie aus der das/die Gebinde hergestellt wird/werden ist von 100 bis 1000 µm, vorzugsweise 300 bis 900 µm, und insbesondere von 400 bis 800 µm. Die Flachfolie besteht dabei aus einer oder mehreren Schichten. Mindestens eine Schicht enthält den eingangs beschriebenen Compound der Komponenten i) bis iv). Eine weitere Schicht des fertig geformten Gebindes bildet vorzugsweise eine Barriere-bildende Schicht. Der Mehrschichtaufbau kann durch Mehrschichtextrusion bei der Flachfolienherstellung hergestellt werden, sowie auch nach der Flachfolienherstellung als Schicht appliziert werden, durch Extrusion, Drucken, Aufsprühen oder Besputtern, prinzipiell mit dem Auftragen einer Dispersion, eines Lackes oder eines weiteren Polymer-basierten oder Polymer-beinhaltenden Systems oder dem Aufbringen einer metallischen- oder oxyd-haltigen Schicht, vorzugsweise jedoch durch eine polymerbasierte oder metallisierte Schicht. Als metallisierte Schicht kommt beispielsweise Aluminium in Frage, als polymerbasierte Schicht eignen sich Schichten enthaltend Polyglykolsäure (PGA), Polyhydroxyalkanoate (PHA) wie z.B. Poly-3-hydroxybutyrat (PHB), Poly-3-hydroxybutyrat-co-3-hydroxyvalerat (PHB(V)), Poly-3-hydroxybutyrat-co-3-hydroxyhexanoat (PHB(H)) oder Poly-3-hydroxybutyrat-co-4-hydroxyvalerat; Polyvinylalkohol (PVOH), Polyvinylidenchlorid (PVDC) oder Ethylenvinylalkohol (EVOH). Diese Barriereschicht ist gekennzeichnet durch eine Sauerstoff-transmissionsrate (oxygen transmission rate (OTR)) gemessen an dem gesamten Folienverbund nach der Gebindeherstellung nach ASTM D1434 von 0 bis 1000 g/m²/d, vorzugsweise von einer Wasserdampftransmissionsrate (water vapor transmission rate) nach ASTM F1249 von 0 bis 1000 g/m²/d, sowie einer gleichzeitigen Aromabarriere

Die gute Sauerstoffbarriere bzw. Aromabarriere lässt sich auch mittels einer Umverpackung für eine oder mehrere Kaffeekapseln erzielen. Geeignete Umverpackungen können mit einem Barrierefilm beschichtete Kunststofffolien oder Papierfolien sein.

Für das Thermoformen eignen sich insbesondere Polymermischungen der Komponenten i bis iv mit einem MVR (190 °C, 2,16 kg) nach ISO 1133-1 vom 01.03.2012 von 1 bis 10 cm³/10 min, insbesondere bevorzugt 2 bis 6 cm³/10 min. Weiterhin haben sich in diesen Polymermischungen insbesondere Polyester i und ii als geeignet erwiesen, die 0.05 bis 1 Gew.-%, bevorzugt von 0.1 bis 0.9 Gew.-% und insbesondere bevorzugt von 0,1 bis 0,3 Gew.-%, bezogen auf die Komponenten i-a bis i-c bzw. ii-a bis ii-c, eines Verzweigers enthalten. Als besonders geeignete Verzweiger haben sich Polyole wie Pentaerythrit oder Glycerin erwiesen. Schließlich haben sich in diesen Polymermischungen insbesondere Polyester i und ii als geeignet erwiesen, die 0.05 bis 1 Gew.-%, bevorzugt von 0.01 bis 0.9 Gew.-% und insbesondere bevorzugt von 0,1 bis 0,8 Gew.-%, bezogen auf die Komponenten i-a bis i-c bzw. ii-a bis ii-c, eines Kettenverlängerers enthalten. Als besonders geeigneter Kettenverlängerer hat sich Hexamethylendiisocyanat erwiesen.

### Anwendungstechnische Messungen:

Die Molekulargewichte Mn und Mw der teilaromatischen Polyester wurden gemäß DIN 55672-1 mittels SEC bestimmt: Elutionsmittel Hexafluoroisopropanol (HFIP) + 0,05 Gew.-% Trifluoroessigsäure-Ka-Salz; Die Kalibrierung erfolgte mit eng verteilten Polymethylmethacrylat-Standards.

Die Bestimmung der Viskositätszahlen erfolgte nach DIN 53728 Teil 3, 3. Januar 1985, Kapillarviskosimetrie. Zum Einsatz kam ein Mikro-Ubbelohde Viskosimeter, Typ M-II. Als Lösungsmittel wurde das Gemisch: Phenol/o-Dichlorbenzol im Gewichtsverhältnis 50/50 verwendet.

Der E-Modul wurde mittels eines Zugversuchs an Zugstäben mit einer Dicke von etwa 420 µm gemäß ISO 527-3: 2003 bestimmt.

Die Charpy-Schlagzähigkeit wurde gemäß DIN EN 179-1/1eU:2000+Amd.A (gemessen bei 23 °C, 50% rel. F.) bestimmt. Der Probekörper (80mm x 10 mm x4 mm), gelagert nahe an seinen Enden als waagerechter Balken, wird durch einen einzelnen Schlag eines Pendels beansprucht, wobei die Aufschlaglinie in der Mitte zwischen den beiden Probekörper-Widerlagern liegt und (der Probekörper) mit einer hohen, nominell konstanten Geschwindigkeit (2,9 oder 3,8 m/s) gebogen wird.

Die Wärmeformbeständigkeit HDT-B wurde gemäß ISO 75-2:2004 bestimmt. Ein Standardprobekörper wird einer Dreipunktbiegung unter konstanter Last ausgesetzt, um eine Biegespannung (HDT/B 0.45 MPa) zu erzeugen, die in dem betreffenden Teil dieser Internationalen Norm angegeben wird. Die Temperatur wird mit gleichförmiger Geschwindigkeit (120 K/h) erhöht, und der Temperaturwert, bei dem eine festgelegte Standarddurchbiegung, die der festgelegten Biegedehnungserhöhung (0.2%) entspricht, erreicht wird, wird gemessen.

### 1.Ausgangsstoffe

Polyester i:
   i-1 Polybutylensuccinat: GS-Pla® FZ91-PD der Firma Mitsubishi Chemical Corporation (MVR bei 5 cm³/10 min (190°C, 2,16 kg))
Polyester ii:
   ii-1 Polybutylensebacat-coterephthalat: ecoflex® FS A1100 der Firma BASF SE (MVR bei 2,5 cm³/10 min (190°C, 2,16 kg)
Komponente iii:
   iii-1 Polymichsäure (PLA) Ingeo® 4043D der Firma NatureWorks (MVR bei 2,5 cm³/10 min (190°C, 2,16 kg))
Komponente iv:
   iv-1 Talc IT extra der Firma Mondo Minerals

### 2.Compoundierung

Die in Tabelle 1 aufgeführten Compounds wurden auf einem Extruder des Typs Coperion MC 40 gefertigt. Die Temperaturen am Austritt wurden auf 250°C eingestellt. Anschließend wurde das Extrudat unter Wasser granuliert. Im Anschluss an die Granulatherstellung wurde eine Flachfolie mit einer Dicke von 0,8 mm hergestellt. Die Verarbeitungstemperaturen wurden hier auf 190°C Massetemperatur eingestellt.

### 3. Herstellung der Artikel (allgemeine Vorschrift AV)

Hier wurde eine halbautomatische Thermoformmaschine vom Typ Illig UA100/4 verwendet. Die Heizleistung von 27,4 kW wurde erzeugt durch einen unteren und einen oberen Keramikstrahler. Die Umformung erfolgte mittels Vakuum. Zum Einsatz für die Versuche kam ein Becherwerkzeug aus Holz mit einem Grunddurchmesser von 67,0 mm, einer Höhe von 72,0 mm sowie einem oberen Durchmesser von 55,0 mm. Die Kante des Bechers hatte einen Radius von ca. 8,0 mm.

**Tabelle 1- mit AV hergestellte Artikel;**

| Beispiel | VGL-Beispiel 1 | 2 | 3 | VGL-Beispiel 4 | |
|---|---|---|---|---|---|
| Compounds (Angaben in Gewichtsprozent) | | | | | |
| i-1 | 41,25 | 45 | 48,75 | 52,5 | |
| ii-1 | 15 | 10 | 5 | 0 | |
| iii-1 | 13,75 | 15 | 16,25 | 17,5 | |
| iv-1 | 30 | 30 | 30 | 30 | |
| | | | | | |

| Durch AV hergestellte Artikel | | | | | |
|---|---|---|---|---|---|
| E-Modulus (Mpa) | | 2700 | | | |
| Charpy (kJ/m²) | 82,3 | 65,6 | 60,1 | 40,8 | |
| HDT/B (° C) | 82,3 | 92,8 | 94,2 | 98,5 | |
| MVR (cm³/10 min) | 3 | 3 | 4 | 4 | |

Die Beispiele 2 und 3 in Tabelle 1 zeigen eine deutlich verbesserte Schlagzähfertigkeit gegenüber thermogeformten Artikeln (Vgl-Beispiel 4), die keinen aliphatisch-aromatischen Polyester ii-1 enthalten. Gleichzeitig bleibt die gute Wärmeformbeständigkeit (HDT/B) erhalten. Im Vgl-beispiel 1 jedoch, das 15 Gew.-% aliphatisch-aromatischren Polyester ii-1 enthält, fällt die Wärmeformbeständigkeit auf unter 85°C ab.

## Patentansprüche

1. Durch Thermoformen hergestellter Artikel enthaltend:
i) 45 bis 59 Gew.-%, bezogen auf das Gesamtgewicht der Komponenten i bis iv, eines biologisch abbaubaren Polyesters enthaltend:
i-a) 90 bis 100 mol %, bezogen auf die Komponenten a bis b, Bernsteinsäure;
i-b) 0 bis 10 mol %, bezogen auf die Komponenten a bis b, einer oder mehrerer C₆-C₂₀ Dicarbonsäuren;
i-c) 98 bis 102 mol %, bezogen auf die Komponenten a bis b, 1,3-Propandiol oder 1,4-Butandiol;
i-d) 0,05 bis 1 Gew.- %, bezogen auf die Komponenten a bis c eines Kettenverlängerers oder Verzweigers;
ii) 5 bis 14 Gew.- %, bezogen auf das Gesamtgewicht der Komponenten i bis iv, eines aliphatisch-aromatischen Polyesters enthaltend:
ii-a) 30 bis 70 mol %, bezogen auf die Komponenten ii-a bis ii-b, einer C₆-C₁₈-Dicarbonsäure;
ii-b) 30 bis 70 mol %, bezogen auf die Komponenten ii-a bis ii-b, Terephthalsäure;
ii-c) 98 bis 100 mol %, bezogen auf die Komponenten ii-a bis ii-b, 1,3-Propandiol oder 1,4-Butandiol;
ii-d) 0,05 bis 1 Gew.- %, bezogen auf die Komponenten a bis c eines Kettenverlängerers oder Verzweigers;
iii) 15 bis 24 Gew.-%, bezogen auf das Gesamtgewicht der Komponenten i bis iv, Polymilchsäure;
iv) 10 bis 35 Gew.-%, bezogen auf das Gesamtgewicht der Komponenten i bis iv, mindestens eines mineralischen Füllstoffs;
wobei für den Compound der Komponenten i bis iv gilt, dass das Verhältnis der Komponente i zur Komponente iii im Compound 2,2 bis 3,2 beträgt und dass der MVR nach DIN EN 1133-1 vom 01.03.2012 (190°C, 2,16 kg) des Compounds 1 bis 10 cm³/10 min beträgt.

2. Artikel nach Anspruch 1, wobei das Verhältnis der Komponente i zur Komponente iii 2,5 bis 3,1 beträgt.

3. Artikel nach Anspruch 1 oder 2, wobei Polyester i einen MVR nach DIN EN 1133-1 vom 01.03.2012 (190°C, 2,16 kg) von 1 bis 10 cm³/10 min aufweist.

4. Artikel nach Anspruch 1 bis 3, wobei Polyester ii einen MVR nach DIN EN 1133-1 vom 01.03.2012 (190°C, 2,16 kg) von 0,8 bis 6 cm³/10 min aufweist.

5. Artikel nach Anspruch 1 bis 4, wobei Polymilchsäure iii einen MVR nach DIN EN 1133-1 vom 01.03.2012 (190°C, 2,16 kg) von 1 bis 10 cm³/10 min aufweist.

6. Artikel nach Anspruch 1 bis 5, der mindestens 20 Gew.-%, bezogen auf das Gesamtgewicht der Komponenten i bis iv, eines mineralischen Füllstoffs iv aufweist.

7. Artikel nach Anspruch 5, wobei der Füllstoff iv Talkum ist.

8. Artikel nach einem der Ansprüche 1 bis 7 mit einer HDT-B Temperatur nach DIN EN ISO 75-2:2004-9 von 85 bis 105 °C.

9. Artikel nach einem der Ansprüche 1 bis 8 mit einem Füllvolumen von 1 bis 80 ml, und einer Sauerstofftransmissionsrate nach ASTM D1434 von 0 bis 1000 g/m²/d, geeignet zur Herstellung von Kaffeekapseln.

10. Verwendung eines Artikels nach einem der Ansprüche 1 bis 8 als Mikrowellengeschirr oder Deckel von Bechern für Heißgetränke.

## Claims

1. An item produced by thermoforming, comprising:
i) from 45 to 59% by weight, based on the total weight of components i to iv, of a biodegradable polyester comprising:
i-a) from 90 to 100 mol%, based on components a to b, of succinic acid;
i-b) from 0 to 10 mol%, based on components a to b, of one or more C₆-C₂₀ dicarboxylic acids;
i-c) from 98 to 102 mol%, based on components a to b, of 1,3-propanediol or 1,4-butanediol;
i-d) from 0.05 to 1% by weight, based on components a to c, of a chain extender or branching agent;
ii) from 5 to 14% by weight, based on the total weight of components i to iv, of an aliphatic-aromatic polyester comprising:
ii-a) from 30 to 70 mol%, based on components ii-a to ii-b, of a C₆-C₁₈-dicarboxylic acid;
ii-b) from 30 to 70 mol%, based on components ii-a to ii-b, of terephthalic acid;
ii-c) from 98 to 100 mol%, based on components ii-a to ii-b, of 1,3-propanediol or 1,4-butanediol;
ii-d) from 0.05 to 1% by weight, based on components a to c, of a chain extender or branching agent;
iii) from 15 to 24% by weight, based on the total weight of components i to iv, of polylactic acid;
iv) from 10 to 35% by weight, based on the total weight of components i to iv, of at least one mineral filler;
where the following applies to the compounded material comprising components i to iv: the ratio of component i to component iii in the compounded material is from 2.2 to 3.2, and the MVR of the compounded material is from 1 to 10 cm³/10 min in accordance with DIN EN 1133-1 of March 1, 2012 (190°C, 2.16 kg).

2. The item according to claim 1, where the ratio of component i to component iii is from 2.5 to 3.1.

3. The item according to claim 1 or 2, where the MVR of polyester i is from 1 to 10 cm³/10 min in accordance with DIN EN 1133-1 of March 1, 2012 (190°C, 2.16 kg).

4. The item according to claim 1 to 3, where the MVR of polyester ii is from 0.8 to 6 cm³/10 min in accordance with DIN EN 1133-1 of March 1, 2012 (190°C, 2.16 kg).

5. The item according to claim 1 to 4, where the MVR of polyester iii is from 1 to 10 cm³/10 min in accordance with DIN EN 1133-1 of March 1, 2012 (190°C, 2.16 kg).

6. The item according to claim 1 to 5, which comprises at least 20% by weight of a mineral filler iv, based on the total weight of components i to iv.

7. The item according to claim 5, where the filler iv is talc powder.

8. The item according to any of claims 1 to 7 with HDT-B temperature of from 85 to 105°C in accordance with DIN EN ISO 75-2:2004-9.

9. The item according to any of claims 1 to 8 with volume capacity of from 1 to 80 ml, and oxygen transmission rate of from 0 to 1000 g/m²/d in accordance with ASTM D1434, suitable for the production of coffee capsules.

10. The use of an item according to any of claims 1 to 8 as microwave tableware or lids of cups for hot drinks.

## Revendications

1. Article fabriqué par thermoformage contenant :
i) 45 à 59 % en poids, par rapport au poids total des composants i à iv, d'un polyester biodégradable contenant :
i-a) 90 à 100 % en moles, par rapport aux composants a à b, d'acide succinique ;
i-b) 0 à 10 % en moles, par rapport aux composants a à b, d'un ou de plusieurs acides dicarboxyliques en C₆-C₂₀ ;
i-c) 98 à 102 % en moles, par rapport aux composants a à b, de 1,3-propanediol ou de 1,4-butanediol ;
i-d) 0, 05 à 1 % en poids, par rapport aux composants a à c, d'un allongeur de chaîne ou d'un agent de ramification ;
ii) 5 à 14 % en poids, par rapport au poids total des composants i à iv, d'un polyester aliphatique-aromatique contenant :
ii-a) 30 à 70 % en moles, par rapport aux composants ii-a à ii-b, d'un acide dicarboxylique en C₆-C₁₈ ;
ii-b) 30 à 70 % en moles, par rapport aux composants ii-a à ii-b, d'acide téréphtalique ;
ii-c) 98 à 100 % en moles, par rapport aux composants ii-a à ii-b, de 1,3-propanediol ou de 1,4-butanediol ;
ii-d) 0,05 à 1 % en poids, par rapport aux composants a à c, d'un allongeur de chaîne ou d'un agent de ramification ;
iii) 15 à 24 % en poids, par rapport au poids total des composants i à iv, d'acide polylactique ;
iv) 10 à 35 % en poids, par rapport au poids total des composants i à iv, d'au moins une charge minérale ; pour le mélange des composants i à iv, le rapport entre le composant i et le composant iii dans le mélange étant de 2,2 à 3,2, et le MVR selon DIN EN 1133-1 du 01.03.2012 (190 °C, 2,16 kg) du mélange étant de 1 à 10 cm³/10 minute.

2. Article selon la revendication 1, dans lequel le rapport entre le composant i et le composant iii est de 2,5 à 3,1.

3. Article selon la revendication 1 ou 2, dans lequel le polyester i présente un MVR selon DIN EN 1133-1 du 01.03.2012 (190 °C, 2,16 kg) de 1 à 10 cm³/10 minutes.

4. Article selon les revendications 1 à 3, dans lequel le polyester ii présente un MVR selon DIN EN 1133-1 du 01.03.2012 (190 °C, 2,16 kg) de 0,8 à 6 cm³/10 minutes.

5. Article selon les revendications 1 à 4, dans lequel l'acide polylactique iii présente un MVR selon DIN EN 1133-1 du 01.03.2012 (190 °C, 2,16 kg) de 1 à 10 cm³/10 minutes.

6. Article selon les revendications 1 à 5, qui comprend au moins 20 % en poids, par rapport au poids total des composants i à iv, d'une charge minérale iv.

7. Article selon la revendication 5, dans lequel la charge iv est le talc.

8. Article selon l'une quelconque des revendications 1 à 7, ayant une température HDT-B selon DIN EN ISO 75-2:2004-9 de 85 à 105 °C.

9. Article selon l'une quelconque des revendications 1 à 8, ayant un volume de remplissage de 1 à 80 ml, et un taux de transmission de l'oxygène selon ASTM D1434 de 0 à 1 000 g/m²/j, approprié pour la fabrication de capsules de café.

10. Utilisation d'un article selon l'une quelconque des revendications 1 à 8 en tant que vaisselle pour le micro-onde ou couvercle de gobelets pour boissons chaudes.
